# DEMANDE DE BREVET EUROPEEN

(11) **EP 1 511 266 A1**
(43) Date de publication de la demande: **02.03.2005**
(21) Numéro de dépôt: 03292117.3
(22) Date de dépôt: 27.08.2003
(51) Int. Cl.: H04L 29/06

(54) **Système et procédé d'adaptation d'une donnée visualisée en mode partage à partir d'un terminal WAP**

(71) Demandeur: FRANCE TELECOM, 75015 Paris (FR)
(72) Inventeur: Vergouwen, Thomas, 75015 Paris (FR); Leprince, Laurent, 91190 Gif sur Yvette (FR)
(74) Mandataire: Lemoyne, Didier

(57) **Abrégé**

Système d'adaptation d'au moins une donnée visualisée en mode partagé entre au moins un premier terminal WAP (10) et au moins un deuxième terminal WAP (10'), mettant en oeuvre au moins une fonction de diffusion automatique en mode "push".

Selon l'invention, ledit système est remarquable en ce qu'il comprend au moins un serveur (11) de partage de données apte à transmettre, vers au moins un serveur (12) de diffusion de données, au moins une demande de diffusion de données adaptée audit premier ou audit deuxième terminal WAP (10, 10').

Application au partage de données entre différents terminaux distants.

## Description

La présente invention concerne un système et un procédé d'adaptation d'une donnée visualisée en mode partagé à partir d'un terminal WAP (Wireless Application Protocol).

L'invention s'applique plus particulièrement au partage à distance entre au moins un premier terminal WAP, visualisant au moins une donnée, et au moins un deuxième terminal WAP.

Un terminal dit "WAP" est un terminal équipé d'un navigateur WAP, compatible avec le protocole d'application sans fil, appelé WAP (Wireless Application Protocol, soit protocole d'application sans fil). Ledit protocole WAP est normalisé par l'organisme de normalisation du WAP, soit le OMA (Open Mobile Alliance).

Un serveur de diffusion de données d'un réseau de communication, par exemple le réseau Internet, fournit des données vers un terminal WAP lorsque celui-ci établit une connexion vers ledit serveur de diffusion de données.

Actuellement, l'évolution du travail coopératif en équipes, réparties par exemple sur plusieurs sites géographiques, rend nécessaire le partage de données. Le partage de données permet à plusieurs personnes de collaborer ensemble. Les données à partager peuvent être de nature très diverse, par exemple une page vierge, un document intégrant une image, une photo ou un plan, un site web sur le réseau Internet, un fichier vidéo ou audio, etc...

Les systèmes existants de transmission de données permettent une transmission multipoint en temps réel sous forme de conférence multimédia, soit vocale, soit visuelle, soit écrite, etc... Pour accéder ou bien échanger lesdites données de toute nature, les terminaux doivent être équipés d'une application spécifique aux dites données, ce qui requière une capacité de traitement et une capacité mémoire importantes sur lesdits terminaux. La bande passante nécessaire pour accéder ou échanger lesdites données est également importante.

Par conséquent, lesdits systèmes sont réservés pour des terminaux à grande capacité mémoire et de traitement, terminaux de type ordinateur personnel ou PC (Personal Computer) ou bien de type assistant personnel numérique ou PDA (Personal Digital Assistant), raccordés sur des réseaux de télécommunications à large bande passante tels que les réseaux de télécommunications fixes.

De plus, certains fournisseurs de données prévoient une adaptation des données diffusées vers le terminal destinataire, raccordé à un serveur de diffusion de données. Par exemple, le serveur de diffusion de données permet un affichage en couleur des données transmises lorsque le terminal est équipé d'un moyen d'affichage compatible avec la couleur. Cette adaptation des données est effectuée au niveau du serveur de diffusion de données. Ladite adaptation est réalisée grâce aux paramètres transmis par le terminal destinataire lors de la demande de diffusion de données vers ledit serveur de diffusion de données. Ladite adaptation est possible grâce à la connexion établie entre ledit serveur de diffusion de données et l'unique terminal destinataire.

Enfin, dans le document EP 02 291 486 est présenté le cas du partage à distance de données, adapté aux réseaux cellulaires de communications avec les mobiles, ainsi qu'à des terminaux sans grande capacité mémoire, notamment les terminaux WAP.

Un serveur de partage de données sert d'intermédiaire entre un premier terminal WAP, qui souhaite partager une donnée, et au moins un deuxième terminal WAP. Ledit serveur de partage de données réalise la gestion du partage à distance de données entre lesdits premier et deuxième terminaux WAP. Le serveur de partage de données reçoit les requêtes en provenance des terminaux WAP, les analyse et les renvoie vers un serveur de diffusion de données après identification desdits terminaux WAP. Le serveur de partage de données dialogue avec un serveur de diffusion automatique en mode "push" pour commander la diffusion desdites données.

Le serveur de partage de données reçoit la donnée en provenance dudit serveur de diffusion de données, réalise autant de copies de ladite donnée que de deuxièmes terminaux WAP distants et transmet ladite donnée vers lesdits premier et deuxième terminaux WAP pour une consultation simultanée. Le document EP 02 291 486 présente uniquement la visualisation en mode partagé d'au moins une donnée sur lesdits premier et deuxième terminaux WAP.

Aussi, le problème technique à résoudre par l'objet de la présente invention est de proposer un système et un procédé d'adaptation d'au moins une donnée visualisée en mode partagé entre au moins un premier terminal WAP et au moins un deuxième terminal WAP, mettant en oeuvre au moins une fonction de diffusion automatique en mode "push", qui permettrait de remédier aux inconvénients des systèmes existants en adaptant ladite donnée aux dits premier et deuxième terminaux WAP.

La solution au problème technique posé consiste, selon la présente invention, en ce que ledit système comprend au moins un serveur de partage de données apte à transmettre, vers au moins un serveur de diffusion de données, au moins une demande de diffusion de données adaptée audit premier ou audit deuxième terminal WAP.

L'invention a également pour objet un procédé d'adaptation d'au moins une donnée visualisée en mode partagé entre au moins un premier terminal WAP et au moins un deuxième terminal WAP, mettant en oeuvre au moins une fonction de diffusion automatique en mode "push", remarquable en ce que ledit procédé comporte les étapes consistant à : - analyser, par au moins un serveur de partage de données, au moins un paramètre en provenance dudit premier ou dudit deuxième terminal WAP ; - insérer par ledit serveur de partage de données ledit paramètre correspondant audit premier ou audit deuxième terminal WAP dans au moins une demande de diffusion de données ; - transmettre par ledit serveur de partage de données ladite demande adaptée de diffusion de données vers au moins un serveur de diffusion de données ; - recevoir dans ledit serveur de partage de données ladite donnée adaptée audit premier ou audit deuxième terminal WAP en provenance dudit serveur de diffusion de données ; - transmettre par ledit serveur de partage de données ladite donnée adaptée vers ledit premier ou ledit deuxième terminal WAP.

Le serveur de partage de données sert d'intermédiaire entre lesdits premier et deuxième terminaux WAP et réalise la gestion d'un partage de données. Il met en mémoire toutes les informations relatives au partage de ladite donnée.

Lorsque l'utilisateur dudit premier terminal WAP actionne une demande de partage d'une donnée avec au moins un deuxième terminal WAP, ledit serveur de partage de données reçoit et analyse les requêtes en provenance des participants audit partage de données. Après analyse, le serveur de partage de données transmet vers au moins un serveur de diffusion de données un nombre de demandes de diffusion de ladite donnée à partager égal au nombre de terminaux WAP participants audit partage de données.

Ledit serveur de partage de données adapte chaque demande de diffusion de données en fonction des capacités de chacun des premier et deuxième terminaux WAP. Cette adaptation de chaque demande de diffusion de données permet la diffusion d'une donnée adaptée à chacun desdits premier et deuxième terminaux WAP.

Sans la gestion par le serveur de partage de données, ladite donnée à partager ne serait seulement adaptée qu'audit premier terminal WAP.

Conformément à l'invention, ladite demande de diffusion de données comprend au moins un paramètre représentant au moins une caractéristique technique dudit premier ou dudit deuxième terminal WAP pour adapter ladite donnée à partager.

Les paramètres représentant une caractéristique technique permettent une adaptation de ladite donnée aux capacités de chaque terminal participant au partage de données.

Par exemple, la taille d'une image transmise peut être adaptée à celle de l'écran existant sur le terminal concerné ou bien, si le terminal WAP est un PC, l'image supportée par l'écran peut être de meilleure qualité que celle transmise vers un téléphone mobile WAP, ou encore le format de la donnée acceptée par le lecteur de fichier du terminal, soit un format WML (Wireless Markup Language) ou un format HTML (Hyper Text Markup Language), etc...

Conformément à l'invention, ladite demande de diffusion de données comprend au moins un paramètre représentant au moins une identification dudit premier ou dudit deuxième terminal WAP pour personnaliser ladite donnée à partager.

L'adaptation peut être fonction de l'identité de l'utilisateur dudit premier ou dudit deuxième terminal WAP, de manière à personnaliser ladite donnée ou bien de manière à réaliser une identification unique pour donner un accès à ladite donnée partagée aux terminaux participants au partage de données.

Selon ledit paramètre d'identification, le serveur de diffusion de données peut, par exemple, modifier des informations correspondant aux centres d'intérêt de certains utilisateurs pour personnaliser la donnée.

Les différents utilisateurs étant reconnus par au moins un paramètre d'identification, certains d'entre eux peuvent, par exemple, avoir accès à certaines données, auxquelles d'autres participants au partage de données n'ont pas accès. L'identification permettra soit d'adapter la donnée en fonction de l'identification, soit de donner accès à ladite donnée à tous les participants.

Selon l'invention, ledit serveur de partage de données transmet vers ledit serveur de diffusion de données au moins une demande adaptée de diffusion de données pour chaque premier et deuxième terminal WAP.

L'adaptation de la donnée est réalisée "terminal par terminal" grâce à une demande de diffusion de données adaptée à chacun des premier et deuxième terminaux WAP.

Du fait du partage de données, ladite donnée est visualisée par des utilisateurs différents et sur des terminaux différents avec des capacités différentes. Le serveur de partage de données transmet vers le serveur de diffusion de données une demande de diffusion différente pour chaque terminal WAP et adaptée à chacun desdits terminaux WAP grâce aux paramètres inclus dans ladite demande de diffusion.

Par conséquent, l'invention permet l'adaptation d'une donnée visualisée lors du partage de données et permet la compatibilité de ladite donnée quels que soient les différents terminaux WAP de différente nature, indifféremment fixes ou mobiles.

Conformément à l'invention, ladite demande de diffusion de données est commandée de façon automatique et uniquement vers lesdits premier et deuxième terminaux participants au mode partagé.

Grâce au serveur de partage de données qui stocke les informations se rapportant au partage de données, la sollicitation des terminaux est réalisée de façon centralisée par ledit serveur de partage de données. De ce fait, ne sont sollicités uniquement que les terminaux participants audit partage de données et mémorisés par le serveur de partage de données.

Le serveur de diffusion automatique de messages en mode "push" permet l'envoie d'un message sans intervention, ni demande du destinataire dudit message. Les messages et requêtes sont donc transmis de façon automatique et uniquement vers lesdits premier et deuxième terminaux WAP.

La description qui va suivre en regard du dessin annexé, donné à titre d'exemple non limitatif, fera bien comprendre en quoi consiste l'invention, comment elle peut être réalisée et d'autres caractéristiques de l'invention en ressortiront.

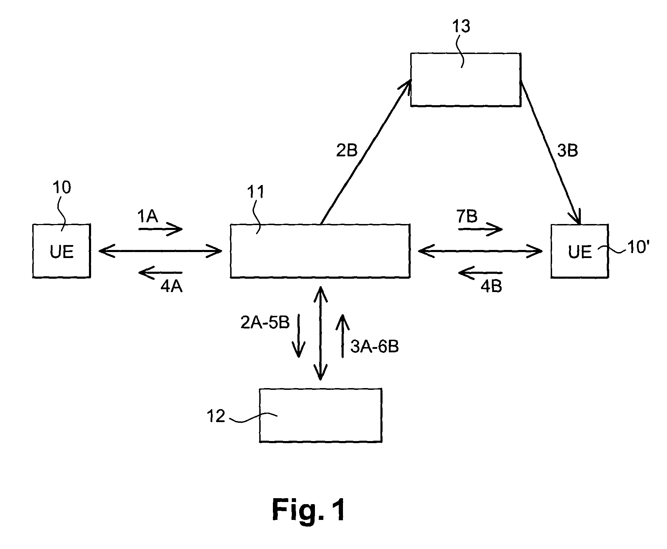

La figure 1 est un schéma illustrant un système et un procédé d'adaptation d'au moins une donnée visualisée en mode partagé conforme à l'invention.

L'utilisateur d'un premier terminal WAP 10 est déjà en communication à distance avec l'utilisateur d'un deuxième terminal WAP 10'. La communication peut également être établie à distance avec plusieurs interlocuteurs, en plus desdits premier et deuxième terminaux WAP 10, 10'.

L'objet de l'invention s'applique à tout type de terminal équipé d'un navigateur WAP, compatible avec le protocole d'application sans fil, appelé WAP (Wireless Application Protocol, soit protocole d'application sans fil), que ledit terminal 10, 10' soit un terminal fixe ou mobile, appelé UE (User Equipment) sur la figure 1.

Ladite communication entre les différents interlocuteurs distants peut être une communication vocale ou bien une vidéocommunication, établie par l'intermédiaire d'un réseau filaire de télécommunications fixes ou bien par l'intermédiaire d'un réseau cellulaire de télécommunications pour les mobiles.

Ladite communication entre les différents interlocuteurs distants peut également être une communication écrite, de manière à permettre un échange en temps réel ou en quasi-temps réel. Ladite communication écrite est, par exemple, une communication par une messagerie électronique ou bien par une messagerie instantanée de type "chat" ou "instant messaging".

En plus de ladite communication déjà établie, l'utilisateur dudit premier terminal WAP 10 souhaite partager une donnée avec au moins un deuxième terminal WAP 10'. Ce partage de données est mis en oeuvre tel que décrit dans le document EP 02 291 486.

Pour ce faire, l'utilisateur dudit premier terminal WAP 10 ouvre un navigateur WAP, qui lui permet d'interroger un serveur 12 de diffusion de données pour recevoir une donnée, que ledit utilisateur souhaite visualiser en mode partagé.

Le serveur 12 de diffusion de données est situé dans tout type de réseau de communication, par exemple le réseau Internet ou bien un réseau intranet privé de communication d'entreprise, qui comprend au moins un serveur de diffusion de données. La connexion entre ledit premier terminal WAP 10 et le serveur 12 de diffusion de données est établie par l'intermédiaire dudit réseau de télécommunications, indifféremment fixes ou cellulaires, auquel est raccordé ledit premier terminal WAP 10.

L'utilisateur dudit premier terminal WAP 10 actionne une demande de partage de données. La donnée à partager peut être de toute nature, par exemple une page au format WML (Wireless Markup Language, soit langage à balisage pour sans fil), un contenu au format XML (eXtensible Markup Language, soit langage à balisage évolué), une image au format flash ou bien tout autre format de données.

La demande de partage de données, en provenance dudit premier terminal WAP 10, est transmise à un serveur 11 de partage de données, qui stocke ladite demande de partage de données.

Pour ce faire, ledit premier terminal WAP 10 envoie vers ledit serveur 11 de partage de données une requête, qui comprend au moins un paramètre concernant le premier terminal WAP 10 et le partage de données (étape 1A).

Ledit paramètre comprend au moins une référence de ladite donnée à partager, l'identifiant dudit premier terminal WAP 10 (par exemple, son numéro MSISDN, soit "Mobile Subscriber Integrated Service Digital Number") et vers quel deuxième terminal WAP 10' se fait le partage de données. Ladite donnée peut également être partagée avec plusieurs interlocuteurs distants, en plus desdits premier et deuxième terminaux WAP 10, 10', comme indiqué dans le document EP 02 291 486.

Lesdits paramètres représentent également au moins une caractéristique technique dudit premier terminal WAP 10, permettant l'adaptation de ladite donnée à partager.

Ladite demande de partage de données peut également comprendre au moins un paramètre représentant au moins une identification dudit premier terminal WAP 10 pour personnaliser ladite donnée à partager.

Tous les paramètres concernant ledit partage de données sont mis en mémoire dans une base de données dudit serveur 11 de partage de données et référencés par une session de partage, référence du partage de données en cours. Ladite base de données peut être physiquement incluse ou non dans ledit serveur 11 de partage de données.

A la réception de ladite demande de partage de données, le serveur 11 de partage de données, incluant un dispositif comprenant au moins un moyen pour analyser au moins un paramètre, analyse les différents paramètres transmis avec la requête en provenance dudit premier terminal WAP 10.

Les paramètres, représentant une caractéristique technique du premier terminal WAP 10, indiquent les capacités dudit premier terminal WAP 10. Notamment, peuvent être indiqués le nom et la version du navigateur WAP installé sur ledit premier terminal WAP 10, paramètre appelé "User Agent", ou bien la langue choisie par l'utilisateur du premier terminal WAP 10, appelé "Accept-Language", ou encore le descriptif détaillé de caractéristiques techniques dudit premier terminal WAP 10, appelé "User Agent Profile", telle que la taille ou la qualité de l'image compatible avec l'écran dudit terminal, la possibilité d'afficher des images en couleur ou en noir et blanc, ou bien le format ou le type des données acceptées par ledit terminal, appelé "MIME type" dans le paramètre "Accept", etc...

Ledit paramètre, représentant l'identification du premier terminal WAP 10, peut permettre une adaptation de ladite donnée à partager en fonction de l'identité de l'utilisateur dudit premier terminal WAP 10, de manière à personnaliser ladite donnée à partager ou bien de manière à réaliser une identification unique pour donner un accès à ladite donnée partagée aux terminaux participants au partage de données.

Lesdits paramètres, inclus dans la requête en provenance dudit premier terminal WAP 10, peuvent être transmis de différentes façons. Soit la requête transmise inclus ledit paramètre directement dans l'URL (Uniform Resource Locator, localiseur de ressources uniformes), comme par exemple dans une requête GET, soit ledit paramètre est inclus dans le corps du message de la requête (par exemple pour une requête POST), soit ledit paramètre est stocké comme un cookie dans le terminal et transmis comme cookie dans les entêtes de ladite requête.

Les transmissions de type GET et de type POST peuvent être combinées. Dans ce cas, une partie des paramètres sont transmis dans l'URL de la requête et les autres paramètres sont transmis dans le corps de ladite requête en provenance du premier terminal WAP 10.

Le serveur 11 de partage de données analyse tous les paramètres reçus en provenance du premier terminal WAP 10. Certains de ces paramètres ne sont relatifs qu'au partage de données en cours (ou session de partage) et concernent ledit serveur 11 de partage. D'autres paramètres ne sont relatifs qu'à l'adaptation des données, telles que les caractéristiques techniques dudit terminal et concernent un serveur 12 de diffusion de données. Certains paramètres, telle que l'identité dudit terminal, peuvent être communs au partage de données et à l'adaptation de la donnée à partager.

Les paramètres concernant l'adaptation des données peuvent également être mis en mémoire dans ladite base de données du serveur 11 de partage de données avant le transfert vers au moins un serveur 12 de diffusion de données.

Après analyse, ledit serveur 11 de partage de données, incluant un dispositif comprenant au moins un moyen de sélection, sélectionne parmi lesdits paramètres reçus pour mettre en mémoire ou bien transmettre lesdits paramètres analysés. Pour ce faire, par exemple, le serveur 11 de partage de données peut comparer lesdits paramètres reçus avec au moins une table de paramètres, mise en mémoire dans ladite base de données.

Après sélection, le serveur 11 de partage de données, incluant un dispositif comprenant au moins un moyen pour insérer au moins un paramètre correspondant audit premier terminal WAP 10, insère au moins ledit paramètre représentant une caractéristique technique du premier terminal WAP 10 dans au moins une demande de diffusion de données, en plus des paramètres correspondant à la diffusion de ladite donnée. Ladite demande de diffusion de données comprend alors les paramètres nécessaires à l'adaptation de la donnée à l'identité et aux caractéristiques techniques dudit premier terminal WAP 10.

Ladite demande de diffusion de données est adaptée audit premier terminal WAP 10. La demande de diffusion de données comprend au moins un paramètre représentant une caractéristique technique dudit premier terminal WAP 10. Ladite demande de diffusion de données comprend au moins un paramètre représentant une identification dudit premier terminal WAP 10.

Ladite demande adaptée de diffusion de données est transmise par le serveur 11 de partage de données vers le serveur 12 de diffusion de données correspondant à la donnée à partager (étape 2A).

Lorsque les paramètres ont été reçus du premier terminal WAP 10 par une transmission de type GET, lesdits paramètres sont transmis vers le serveur 12 de diffusion de données dans une requête GET.

Lorsque les paramètres ont été reçus du premier terminal WAP 10 par une transmission de type POST, lesdits paramètres sont transmis vers le serveur 12 de diffusion de données dans une requête POST.

Lors de la combinaison des transmissions de type GET et POST, lesdits paramètres sont transmis vers le serveur 12 de diffusion de données avec une requête POST, qui comprend des paramètres dans l'URL de ladite requête (type GET).

Lorsque au moins un paramètre a été reçu comme un cookie, ledit cookie a été mis en mémoire sous la référence de la session de partage et transmis vers ledit serveur 12 de diffusion de données.

Lorsque au moins un cookie est reçu en provenance d'un serveur 12 de diffusion de données, ledit cookie est également mis en mémoire sous la même référence de la session de partage. Pour toute requête suivante dans la même session de partage, si utile, lesdits cookies sont transmis vers au moins un serveur 12 de diffusion de données.

Le serveur 12 de diffusion de données transmet alors la donnée adaptée vers ledit serveur 11 de partage de données (étape 3A). Le serveur 11 de partage de données reçoit ladite donnée à partager, adaptée à l'identité et aux caractéristiques techniques du premier terminal WAP 10, en provenance du serveur 12 de diffusion de données.

L'adaptation des données est effectuée au niveau du serveur 12 de diffusion de données. Ladite adaptation est réalisée grâce aux paramètres transmis lors de la demande de diffusion de données vers ledit serveur 12 de diffusion de données.

Ledit serveur 11 de partage de données transmet ladite donnée adaptée vers le premier terminal WAP 10 (étape 4A).

Comme il a stocké les informations se rapportant audit partage de données en cours (ou session de partage), le serveur 11 de partage de données sollicite tous les terminaux, et uniquement les terminaux, participants au partage de données.

Pour réaliser le partage de données, le serveur 11 de partage de données dialogue avec au moins un serveur 13 de diffusion automatique en mode "push" pour commander une demande de diffusion de ladite donnée par le deuxième terminal WAP 10'.

Le serveur 11 de partage de données commande une demande de chargement automatique de données vers ledit serveur 13 de diffusion automatique en mode "push", en indiquant au moins la référence de ladite donnée à partager ainsi que l'identifiant dudit deuxième terminal WAP 10' (étape 2B).

La diffusion automatique de messages en mode "push" permet l'envoi d'un message sans intervention, ni demande du destinataire dudit message. Ledit message transmis en mode "push" peut, soit contenir directement des informations, soit indiquer une adresse avec un lien hypertext pour accéder aux dites informations. Ladite diffusion automatique en mode "push" est normalisée par l'organisme de normalisation du WAP, soit le OMA (Open Mobile Alliance).

Selon la nature du réseau de télécommunications sur lequel est raccordé ledit terminal WAP 10, ledit serveur 13 de diffusion automatique en mode "push" peut comprendre plusieurs équipements, tels qu'un équipement d'initiation de push (Push Initiator), un équipement d'interface de push ou "Push Proxy" ou tout autre équipement.

Le serveur 13 de diffusion automatique en mode "push" envoie vers ledit deuxième terminal WAP 10' une requête en mode "push", qui inclut au moins une demande de chargement automatique de données (étape 3B).

Ladite demande de chargement automatique de données inclut également l'adresse dudit serveur 11 de partage de données, qui a sollicité ledit serveur 13 de diffusion automatique en mode "push".

Ledit deuxième terminal WAP 10', mettant en oeuvre au moins une fonction de diffusion automatique en mode "push", reçoit de façon automatique ladite demande de chargement automatique de données, comprenant au moins ladite référence de ladite donnée à partager. De façon automatique, ledit deuxième terminal WAP 10' envoie une requête de réponse vers le serveur 11 de partage de données (étape 4B).

De la même façon que pour le premier terminal WAP 10, la requête de réponse en provenance dudit deuxième terminal WAP 10' comprend au moins un paramètre concernant le partage de données (soit l'identifiant du deuxième terminal WAP 10' et au moins une référence de la donnée à partager), ainsi qu'au moins un paramètre représentant une caractéristique technique dudit deuxième terminal WAP 10'.

Ladite demande de diffusion de données peut également comprendre au moins un paramètre représentant au moins une identification dudit deuxième terminal WAP 10' pour personnaliser ladite donnée à partager.

A la réception de ladite requête de réponse, le serveur 11 de partage de données identifie ledit deuxième terminal WAP 10' concerné par ladite donnée à partager.

A nouveau, le serveur 11 de partage de données met en mémoire et analyse lesdits paramètres reçus en provenance du deuxième terminal WAP 10', de la même manière que lors de l'étape 1A concernant le premier terminal WAP 10.

Après sélection, de la même façon, le serveur 11 de partage de données insère au moins ledit paramètre représentant une caractéristique technique du deuxième terminal WAP 10' dans au moins une demande de diffusion de données, en plus des paramètres correspondant à la diffusion de ladite donnée.

Ladite demande de diffusion de données comprend alors les paramètres nécessaires à l'adaptation de la donnée à l'identité et aux caractéristiques techniques dudit deuxième terminal WAP 10'. Ladite demande de diffusion de données est adaptée audit deuxième terminal WAP 10'.

Les caractéristiques techniques des premier et deuxième terminaux WAP 10, 10' peuvent être différentes, selon les capacités des différents premier et deuxième terminaux WAP 10, 10'. Lesdites caractéristiques techniques sont reçues de façon indépendante par ledit serveur 11 de partage de données.

Ladite nouvelle demande adaptée de diffusion de données est transmise par ledit serveur 11 de partage de données vers ledit serveur 12 de diffusion de données correspondant à la donnée à partager (étape 5B).

Ladite donnée est adaptée par le serveur 12 de diffusion de données grâce aux paramètres inclus dans ladite nouvelle demande adaptée de diffusion de données.

Le serveur 12 de diffusion de données transmet alors la donnée adaptée vers ledit serveur 11 de partage de données (étape 6B). Le serveur 11 de partage de données reçoit ladite donnée à partager, adaptée à l'identité et aux caractéristiques techniques du deuxième terminal WAP 10', en provenance du serveur 12 de diffusion de données.

Ledit serveur 11 de partage de données transmet ladite donnée adaptée vers le deuxième terminal WAP 10' (étape 7B).

Lors de la mise en oeuvre du partage de données par le premier terminal WAP 10, ledit serveur 11 de partage de données a mis en mémoire au moins l'identifiant du deuxième terminal WAP 10' avec lequel est réalisé ledit partage de données ou bien l'identifiant de tous les participants audit partage de données en cours (ou session de partage).

Ladite donnée peut être partagée avec plusieurs interlocuteurs distants, en plus desdits premier et deuxième terminaux WAP 10, 10'. Dans ce cas, ledit serveur 11 de partage de données répète les étapes 2B à 7B, tel que décrit précédemment concernant le deuxième terminal WAP 10'. Le procédé conforme à l'invention est mis en oeuvre par le serveur 11 de partage de données autant de fois qu'il existe de terminaux WAP participants au partage de ladite donnée.

Par conséquent, ledit serveur 11 de partage de données envoie autant de demandes adaptées de diffusion de données qu'il existe de terminaux WAP participants au partage de données. Chaque demande de diffusion de données est adaptée auxdits premier ou deuxième terminaux WAP 10, 10' concernés.

Grâce au serveur 11 de partage de données, qui stocke les informations se rapportant audit partage de données (ou session de partage), la sollicitation des terminaux est réalisée de façon centralisée par ledit serveur 11 de partage de données. De plus, ne sont uniquement sollicités et de façon automatique que les terminaux participants audit partage de données et mémorisés par le serveur 11 de partage de données. Ladite demande de diffusion de données est commandée de façon automatique et uniquement vers lesdits premier et deuxième terminaux WAP 10, 10' participants au partage de données.

La diffusion automatique de messages en mode "push" permet l'envoie d'un message sans intervention, ni demande du destinataire dudit message. Ladite diffusion automatique en mode "push" est normalisée par l'organisme de normalisation du WAP, soit l'OMA (Open Mobile Alliance).

Le serveur 11 de partage de données a transmis ladite donnée aux dits deuxièmes terminaux WAP 10'. Ladite donnée est alors visualisée en mode partagé par lesdits premier et deuxième terminaux WAP 10, 10', qui peuvent naviguer simultanément.

Tel que le montre la description ci-dessus, le serveur 11 de partage de données stocke au moins la liste des terminaux WAP participants au partage de données (ou session de partage). Par conséquent, ledit serveur 11 de partage de données sert d'intermédiaire entre lesdits premier et deuxième terminaux WAP 10, 10'. Sans la gestion par le serveur 11 de partage de données, ladite donnée à partager ne serait seulement adaptée qu'audit premier terminal WAP 10.

Grâce au moyen logiciel prévu tel qu'un programme d'ordinateur, le serveur 11 de partage de données analyse au moins un paramètre en provenance d'au moins un premier ou un deuxième terminal WAP 10 ou 10', insère ledit paramètre correspondant audit premier ou audit deuxième terminal WAP 10 ou 10' dans au moins une demande de diffusion de données, transmet ladite demande adaptée de diffusion de données vers au moins un serveur 12 de diffusion de données, reçoit ladite donnée adaptée audit premier ou audit deuxième terminal WAP 10, 10' en provenance dudit serveur 12 de diffusion de données, transmet ladite donnée adaptée vers ledit premier ou deuxième terminal WAP 10, 10'.

## Revendications

1. Système d'adaptation d'au moins une donnée visualisée en mode partagé entre au moins un premier terminal WAP (10) et au moins un deuxième terminal WAP (10'), mettant en oeuvre au moins une fonction de diffusion automatique en mode "push", caractérisé en ce ledit système comprend au moins un serveur (11) de partage de données apte à transmettre, vers au moins un serveur (12) de diffusion de données, au moins une demande de diffusion de données adaptée audit premier ou audit deuxième terminal WAP (10, 10').

2. Système d'adaptation d'au moins une donnée selon la revendication 1, **caractérisé en ce que** ladite demande de diffusion de données comprend au moins un paramètre représentant au moins une caractéristique technique dudit premier ou dudit deuxième terminal WAP (10, 10') pour adapter ladite donnée à partager.

3. Système d'adaptation d'au moins une donnée selon la revendication 1, **caractérisé en ce que** ladite demande de diffusion de données comprend au moins un paramètre représentant au moins une identification dudit premier ou dudit deuxième terminal WAP (10, 10') pour personnaliser ladite donnée à partager.

4. Système d'adaptation d'au moins une donnée selon l'une quelconque des revendications 1 à 3 **caractérisé en ce que** ledit serveur (11) de partage de données transmet vers ledit serveur (12) de diffusion de données au moins une demande adaptée de diffusion de données pour chaque premier et deuxième terminal WAP (10, 10').

5. Système d'adaptation d'au moins une donnée selon l'une quelconque des revendications 1 à 4, **caractérisé en ce que** ledit serveur (11) de partage de données sélectionne, après analyse parmi lesdits paramètres reçus, pour mettre en mémoire ou transmettre lesdits paramètres sélectionnés.

6. Système d'adaptation d'au moins une donnée selon l'une quelconque des revendications 1 à 5, **caractérisé en ce que** ledit serveur (11) de partage de données dialogue avec au moins un serveur (13) de diffusion automatique en mode "push" pour commander ladite demande de diffusion de données par ledit deuxième terminal WAP (10').

7. Système d'adaptation d'au moins une donnée selon l'une quelconque des revendications 1 à 6, **caractérisé en ce que** lesdits premier et deuxième terminaux WAP (10, 10') sont indifféremment connectés en fixe ou en mobile à un réseau fixe ou à un réseau cellulaire de télécommunications.

8. Système d'adaptation d'au moins une donnée selon l'une quelconque des revendications 1 à 7, **caractérisé en ce que** ladite demande de diffusion de données est commandée de façon automatique et uniquement vers lesdits premier et deuxième terminaux (10, 10') participants au mode partagé.

9. Dispositif associable à un système d'adaptation d'au moins une donnée selon l'une quelconque des revendications 1 à 8, **caractérisé en ce qu'**il comprend au moins un moyen pour analyser au moins un paramètre en provenance dudit premier ou dudit deuxième terminal WAP (10, 10'), un moyen pour sélectionner au moins un paramètre analysé, un moyen pour insérer ledit paramètre correspondant audit premier ou deuxième terminal WAP (10, 10') dans ladite demande de diffusion de données.

10. Serveur (11) de partage de données associable à un système d'adaptation d'au moins une donnée selon l'une quelconque des revendications 1 à 9, **caractérisé en ce qu'**il comprend au moins ledit dispositif conforme à la revendication 8.

11. Procédé d'adaptation d'au moins une donnée visualisée en mode partagé entre au moins un premier terminal WAP (10) et au moins un deuxième terminal WAP (10'), mettant en oeuvre au moins une fonction de diffusion automatique en mode "push", **caractérisé en ce que** ledit procédé comporte les étapes consistant à :
- analyser, par au moins un serveur (11) de partage de données, au moins un paramètre en provenance dudit premier ou dudit deuxième terminal WAP (10, 10'),
- insérer par ledit serveur (11) de partage de données ledit paramètre correspondant audit premier ou audit deuxième terminal WAP (10, 10') dans au moins une demande de diffusion de données,
- transmettre par ledit serveur (11) de partage de données ladite demande adaptée de diffusion de données vers au moins un serveur (12) de diffusion de données,
- recevoir dans ledit serveur (11) de partage de données ladite donnée adaptée audit premier ou audit deuxième terminal WAP (10, 10') en provenance dudit serveur (12) de diffusion de données,
- transmettre par ledit serveur (11) de partage de données ladite donnée adaptée vers ledit premier ou ledit deuxième terminal WAP (10, 10').

12. Programme d'ordinateur **caractérisé en ce qu'**il comprend des lignes d'instructions pour exécuter les étapes suivantes lors d'une demande de diffusion de données :
- analyser au moins un paramètre en provenance d'au moins un premier ou un deuxième terminal WAP (10, 10'),
- insérer ledit paramètre correspondant audit premier ou audit deuxième terminal WAP (10, 10') dans au moins une demande de diffusion de données,
- transmettre ladite demande adaptée de diffusion de données vers au moins un serveur (12) de diffusion de données,
- recevoir ladite donnée adaptée audit premier ou audit deuxième terminal WAP (10, 10') en provenance dudit serveur (12) de diffusion de données,
- transmettre ladite donnée adaptée vers ledit premier ou deuxième terminal WAP (10, 10').
